(19) **Europäisches Patentamt**

**European Patent Office**

**Office européen des brevets**

(11) Veröffentlichungsnummer : **0 081 095**
**B1**

(12) **EUROPÄISCHE PATENTSCHRIFT**

(45) Veröffentlichungstag der Patentschrift :
26.06.85

(51) Int. Cl.⁴ : **F 16 L 11/08**

(21) Anmeldenummer : **82110403.1**

(22) Anmeldetag : **11.11.82**

(54) **Schlauch für Schlauchpumpen.**

(30) Priorität : **03.12.81 DE 3147799**

(43) Veröffentlichungstag der Anmeldung :
**15.06.83 Patentblatt 83/24**

(45) Bekanntmachung des Hinweises auf die Patenterteilung : **26.06.85 Patentblatt 85/26**

(84) Benannte Vertragsstaaten :
**AT BE CH DE FR GB IT LI NL SE**

(56) Entgegenhaltungen :
DE-A- 2 554 432
DE-B- 1 675 358
FR-A- 2 230 921

(73) Patentinhaber : **Continental Gummi-Werke Aktiengesellschaft**
**Königsworther Platz 1**
**D-3000 Hannover 1 (DE)**

(72) Erfinder : **Schmitt, Rolf, Ing. grad.**
**Hildesheimer Strasse 221**
**D-3000 Hannover 81 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung bezieht sich auf aus Gummi oder gummiähnlichen Kunststoffen hergestellte Schläuche für Schlauchpumpen, mit in ihre Wandung eingebetteten Verstärkungen in Form von zwei mit radialem Abstand übereinander mit entgegengesetzter Steigungsrichtung gewickelten Wendeln eines Metall- oder Kunststoffdrahtes.

Schlauchpumpen, nach ihrem Wirkungsprinzip in Anlehnung an die Motorik der Magen-Darm-Muskulatur auch als Peristaltik-Pumpen bezeichnet, werden mit Vorteil zum Fördern stark fremdstoffdurchsetzter Flüssigkeiten und pastöser oder breiiger Massen eingesetzt, da ihre unkomplizierte Bauart ohne Ventile und Dichtungen und ohne aufeinander gleitende metallische Teile vom Fördergut verursachte Störungen praktisch ausschließt und in vielen Fällen die Förderung überhaupt erst ermöglicht. Ihr Hauptteil, Pumpkammer und Vortriebsmittel zugleich, ist ein auf einer Kreisbahn oder stattdessen auch geradlinig gestreckt auf einer starren Unterlage ausgelegter biegsamer Schlauch, der durch einen oder mehrere fortlaufend über ihn hinweggeführte Druckkörper örtlich bis zum dichtenden Aneianderliegen seiner Wandungen zusammengepreßt und in dem das Fördergut mit dem Weiterwandern der Verschlußstellen kontinuierlich vorwärtsbewegt wird. Wenn solche Pumpen auch von den allen rein mechanisch wirkenden Systemen innewohnenden Fehlermöglichkeiten frei sind, so unterliegen doch die Schläuche aufgrund der ständigen Verformungen im Verein mit den unmittelbar auf die Innenwandung einwirkenden Einflüssen des unter Umständen stückige oder auch scharfkantige Teile mit sich führenden Fördergutes starkem Verschleiß, der zu häufigem kostenversursachenden und stets mit Betriebsausfallzeiten verbundenen Austausch zwingt. In besonderem Maße gilt dies für das Fördern von Mehrphasengemischen mit flüssigen und festen Bestandteilen wie beispielsweise den im Bauwesen verwendeten hydraulischen Zementen und Zementgemischen und anderen keramischen Massen.

Es sind Kautschuk-Schläuche vergleichsweise geringer lichter Weite mit in mehreren Lagen übereinander mit abwechselnd S- und Z-förmigem Verlauf gewickelten eingebetteten Metallkabelwendeln bekannt (deutsche Patentschrift 1 675 358), wobei aber schon die niedrigere Größenklasse und die für besondere Einsatzzwecke geforderte hohe Dehnungsfähigkeit einengende Auflagen für den Aufbau der Metallkabel nach sich ziehen. Der Erfindung liegt demgegenüber als Aufgabe eine neuartige Ausbildung und Gestaltung von Pumpenschläuchen zugrunde mit dem Ziel, ihnen eine im Vergleich zu bekannten Schläuchen dieser Art unter sonst gleichen Bedingungen wesentlich längere Lebensdauer zu verleihen.

Nach der Erfindung zeichnen sich Schläuche der eingangs geschilderten Gattung dadurch aus, daß die Wendeln als ausschließliche Verstärkungen im Mittenbereich des Wandungsquerschnittes mit einem gegenseitigen radialen Abstand in einer etwa dem anderhalbfachen des Drahtdurchmessers entsprechenden Größenordnung angeordnet sind und die Drähte benachbarter Windungen in den beiden Wendeln einen gegenseitigen Mittenabstand in einer etwa dem anderthalbfachen ihres Durchmessers entsprechenden Größenordnung aufweisen.

Überraschend konnten mit der neuartigen Schlauchkonstruktion die unter rauhen Betriebsbedingungen an Schlauchpumpen sonst nach verhältnismäßig kurzer Gebrauchsdauer auftretenden Ausfallerscheinungen über längere Zeit zurückgehalten werden. In praktischen Versuchen ergab sich eine bis zu 40 % längere Lebensdauer der erfindungsgemäßen Schläuche gegenüber vergleichbaren anderen Schlauchausführungen. Als wichtige Voraussetzung hierfür hat sich neben der paarigen Anordnung der Armierungswendeln deren nach allen Richtungen hin vollständig isolierte Einbettung in den elastomeren Werkstoff der Schlauchwandung ohne auch nur bereichsweise gegenseitige Berührung einzelner Windungen untereinander, das heißt, die Einhaltung der angegebenen Abstände sowohl benachbarter Windungen in den beiden Wendeln in Axialrichtung voneinander als auch der Wendeln selbst in radialrichtung gegeneinander herausgestellt. Auf eine Kurzformel gebracht, kann sich der Wert für diese Abstände in den Grenzen von 1,2 bis 1,5 mal dem Durchmesser bewegen.

Die Unterbringung in einer zentralen Zone der Schlauchwandung schützt die Einlagen vor direkten mechanischen Einwirkungen durch grobstückige Fremdkörper im Fördergut, und andererseits bietet die auf diese Weise vergleichsweise dick ausgebildete Innenschicht des elastomeren Schlauchwerkstoffes ausreichenden Spielraum zum örtlichen elastischen Ausweichen und auch zum zuverlässigen Abdichten in den ständig wandernden Verformungsbereichen. Die Wendeln sind zweckmäßig beide in gleicher Weise von multifil untereinander verseilten Drähten, beispielsweise Edelstahldrähten gebildet, wobei zum Vergrößern ihrer Oberfläche im Hinblick auf eine gute Haftverbindung zu den angrenzenden Elastomerschichten zusätzliche Außendrähte mit weiter Steigung auf die Drahtseile aufgewickelt sein können.

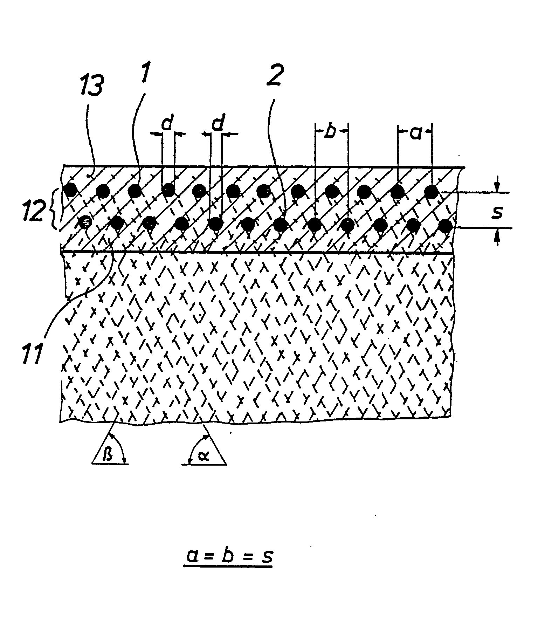

Die Erfindung ist anhand der schematischen Darstellung eines Ausführungsbeispiels in der Zeichnung verdeutlicht. Die einzige Figur der Zeichnung zeigt ein Teilstück eines neuartigen Pumpenschlauches im Längsschnitt.

Der zum Einbau in eine Schlauchpumpe bestimmte gezeichnete Schlauch ist aus Gummi mit zwei in gleichachsiger Ausrichtung zueinander in seine Wandung eingebetteten Verstärkungswendeln 1, 2 hergestellt. In grober Unterteilung mit fließenden Übergängen ist die Schlauchwandung aus drei Schichten aufgebaut: dem Innengummi 11, dem die Wendeln aufnehmenden Zwischengummi 12 und dem Außengummi 13, wobei zumindest der Außengummi 13 aus einer ölbeständigen Kautschukmischung gebildet ist.

Die beiden Verstärkungswendeln 1 und 2 sind aus sogenannten umwendelten Stahldrahtseilen, das heißt mit einem zusätzlichen Außendraht in weiter Steigung umwickelten Drahtseilen oder -litzen aufgebaut und mit gegenseitigem radialen Abstand gleichachsig zueinander in den Zwischengummi 12 der Schlauchwandung eingebettet. Ihre mit den Neigungswinkeln α und β gegen die Schlauchlängsachse bezeichnete Steigung ist in beiden Fällen gleich groß, z. B. in einer Größenordnung von etwa 30° bis 45°, aber einander entgegengerichtet. Die Wahl eines möglichst spitzen Neigungswinkels sichert das für den Gebrauch des Pumpschlauches wichtige gleichbleibende Längenmaß auch unter der Wirkung von Innendrücken. Beide Wendeln 1, 2 sind in verhältnismäßig weit auseinandergezogenem Zustand eingebaut, so daß über ihre ganze Länge zwischen benachbarten Windungen ein axialer Mittenabstand a bzw. b in einer Größenordnung zwischen 1,2 bis 1,5 d eingestellt ist, wobei mit d der Durchmesser der Drahtsile bezeichnet ist. Ein Maß s von der gleichen Größenordnung gilt auch für den radialen Abstand der Wendeln, von Seilmitte zu Seilmitte gemessen. Jede Gefahr einer schädlichen Berührung der Wendeln oder ihrer Windungen untereinander ist daher mit Sicherheit vermieden.

### Patentansprüche

1. Aus Gummi oder gummiähnlichen Kunststoffen hergestellter Schlauch für Schlauchpumpen, mit in seine Wandung (11, 12, 13) im Mittenbereich des Wandungsquerschnittes eingebetteten Verstärkungen in Form von zwei mit radialem Abstand übereinander mit entgegengesetzter Steigungsrichtung gewickelten Wendeln eines Metall- oder Kunststoffdrahtes, dadurch gekennzeichnet, daß die Wendeln (1, 2) als ausschließliche Verstärkungen mit einem gegenseitigen radialen Abstand (s) in einer etwa dem anderthalbfachen des Drahtdurchmesser (d) entsprechenden Größenordnung angeordnet sind und die Drähte benachbarter Windungen in den beiden Wendeln einen gegenseitigen Mittenabstand (a, b) in einer etwa dem anderthalbfachen ihres Durchmessers (d) entsprechenden Größenordnung aufweisen.

2. Schlauch nach Anspruch 1, dadurch gekennzeichnet, daß die Wendeln (1, 2) von multifil untereinander verseilten Drähten gebildet sind.

3. Schlauch nach Anspruch 2, dadurch gekennzeichnet, daß die Wendeln (1, 2) von zusätzlich mit einem mit weiter Steigung aufgebrachten Außendraht umwickelten Drahtseilen gebildet sind.

### Claims

1. Flexible tube made from rubber or rubberlike plastics materials for stricture pumps, said tube comprising reinforcing members which are inset into its wall (11, 12, 13) in the central region of the wall cross-section and which are in the form of two coils of a metal or plastics wire wound one above the other in opposite pitch directions with a radial spacing therebetween, characterised in that the coils (1, 2) are disposed as exclusive reinforcing members with a mutual radial spacing (s) therebetween of an order of magnitude corresponding to approximately one and a half times the wire diameter (d), and the wires of adjacent windings in the two coils have a mutual central spacing (a, b,) of an order of magnitude corresponding to approximately one and a half times their diameter (d).

2. Flexible tube according to claim 1, characterised in that the coils (1, 2) are formed from multifilamentary intertwined wires.

3. Flexible tube according to claim 2, characterised in that the coils (1, 2,) are formed from wire cables which are additionally covered with an outer wire applied with a wide pitch.

### Revendications

1. Tuyau souple, fabriqué à partir de caoutchouc ou de matières plastiques analogues à du caoutchouc, pour des pompes à tuyaux souples, comportant des renforcements noyés dans leur paroi sous la forme de deux spirales d'un fil en métal ou en matière plastique enroulées avec espacement radial l'une au-dessus de l'autre avec des directions d'inclinaison opposées, caractérisé en ce que les spirales (1, 2) sont disposées sous la forme de renforcements exclusifs dans une zone centrale de la section de paroi, avec un espacement radial mutuel (S) d'un ordre de grandeur correspondant à peu près à une fois et demie le diamètre de fil et en ce que les fils de spires adjacentes dans les deux spirales ont entre eux un espacement axial (a, b) d'un ordre de grandeur correspondant à peu près à une fois et demie leur diamètre (d).

2. Tuyaux souples selon la revendication 1, caractérisés en ce que les spirales (1, 2) sont constituées par des fils liés par câblage avec filaments multiples.

3. Tuyaux souples selon la revendication 2, caractérisés en ce que les spirales (1, 2) sont constituées par des câbles en fils enroulés additionnellement avec un fil extérieur disposé avec une inclinaison plus forte.

$$\underline{a = b = s}$$